# EUROPÄISCHE PATENTSCHRIFT

(11) **EP 2 416 528 B1**
(45) Veröffentlichungstag und Bekanntmachung des Hinweises auf die Patenterteilung: **30.01.2013**
(21) Anmeldenummer: 10008185.0
(22) Anmeldetag: 05.08.2010
(51) Int. Cl.: H04L 12/40

(54) **Verfahren zur Kommunikation in einem Automatisierungsnetzwerk**
Method for communicating in an automation network
Procédé de communication dans un réseau d'automatisation

(43) Veröffentlichungstag der Anmeldung: 08.02.2012
(73) Patentinhaber: SIEMENS AKTIENGESELLSCHAFT, 80333 München (DE)
(72) Erfinder: Angst, Hermann, 76199 Karlsruhe (DE)

(56) Entgegenhaltungen:
- EP-A1- 0 998 081
- US-A1- 2006 146 842
- US-A1- 2009 119 437

## Beschreibung

Die Erfindung betrifft ein Verfahren zur Kommunikation in einem Automatisierungsnetzwerk, insbesondere ein Verfahren, das eine Blockierung von Automatisierungsdaten ermöglicht.

In US 2009/119437 A1 ist ein Verfahren zur Datenkommunikation von Busteilnehmern eines offenen Automatisierungssystems beschrieben, bei dem ein Anschluss beliebiger Busteilnehmer mit individueller, interaktiver Kommunikation ermöglicht wird. Dabei ist ein Kommunikations-Controller aus mindestens einer frei programmierbaren Kommunikationseinheit aufgebaut. In einem Befehlscode der Kommunikationseinheit sind mehrere Befehle kodiert, so daß dieser auf spezielle Kommunikationsfunktionen optimiert ist. In der Kommunikationseinheit sind Logikfunktionsblöcke parallel angeordnet, die spezielle Kommunikationsfunktionen ausführen. Dadurch sind Kommunikationsfunktionen nicht fest vorgegeben, sondern mittels der frei programmierbaren und auf Kommunikationsfunktionen optimierten Kommunikationseinheit realisiert. Damit können in einem Systemtakt mehrere Befehle ausgeführt und Übergänge zwischen Teilnetzen unterschiedlicher Art realisiert werden.

An ein Automatisierungsnetzwerk werden hohe Ansprüche hinsichtlich Robustheit und Zuverlässigkeit gestellt. Daher ist für den Anlagenbetreiber von hoher Wichtigkeit, dass nur autorisierte Teilnehmer Zugang zu dem Automatisierungsnetzwerk haben. Durch Verwendung von Protokollen wie 802.1x kann ein Zugangsschutz zu dem Automatisierungsnetzwerk umgesetzt werden. Diese Protokolle setzen die Unterstützung des jeweiligen Protokolls sowohl durch die im Netz befindlichen Switches als auch die Endgeräte im Automatisierungsnetzwerk voraus.

Der Erfindung liegt demgegenüber die Aufgabe zugrunde, ein verbessertes Verfahren zur Kommunikation in einem Automatisierungsnetzwerk zu schaffen. Außerdem liegen der Erfindung die Aufgaben zugrunde, einen verbesserten Netzwerkknoten für ein Automatisierungsnetzwerk, ein verbessertes computerlesbares Speichermedium für einen solchen Netzwerkknoten und ein verbessertes Automatisierungsnetzwerk zu schaffen.

Die der Erfindung zugrunde liegenden Aufgaben werden mit den unabhängigen Patentansprüchen gelöst. Ausführungsformen der Erfindung sind in den abhängigen Patentansprüchen gegeben.

Erfindungsgemäß wird ein Verfahren zur Kommunikation in einem Automatisierungsnetzwerk geschaffen.

Ein Automatisierungsnetzwerk kann z.B. als industrielles Automatisierungsnetzwerk ausgebildet sein. Solche industriellen Automatisierungsnetzwerke können z.B. zur Steuerung und/oder Regelung von industriellen Anlagen (z.B. Produktionsanlagen, Förderanlagen usw.), Maschinen und/oder Geräten ausgebildet, eingerichtet und/oder vorgesehen sein. Insbesondere können Automatisierungsnetzwerke bzw. industrielle Automatisierungsnetzwerke Echzeit-Kommunikationsprotokolle (z.B. Profinet, Profibus, Real-Time-Ethernet)zur Kommunikation zumindest zwischen den an den Steuerungs- und/oder Regelungsaufgaben beteiligten Komponenten (z.B. zwischen den Steuerungseinheiten und den zu steuernden Anlagen und/oder Maschinen) aufweisen. Die sichere Übertragung von Daten über Speichermedien ist ebenfalls abgedeckt.

Weiterhin kann neben einem Echtzeit-Kommunikationsprotokoll aber auch noch mindestens ein weiteres Kommunikationsprotokoll (das z.B. nicht echtzeitfähig zu sein braucht) in dem Automatisierungsnetzwerk bzw. industriellen Automatisierungsnetzwerk vorgesehen sein, z.B. zum Überwachen, Einrichten, Umprogrammieren oder/oder Umparametrieren einer oder mehrerer Steuerungseinheiten im Automatisierungsnetzwerk.

Ein Automatisierungsnetzwerk kann z.B. drahtgebundene Kommunikationskomponenten und/oder drahtlose Kommunikationskomponenten umfassen. Außerdem kann ein Automatisierungsnetzwerk zumindest eine Automatisierungseinrichtung umfassen.

Eine Automatisierungseinrichtung kann beispielsweise ein Computer, PC und/oder Controller mit Steuerungs-Aufgaben bzw. Steuerungs-Fähigkeiten sein. Insbesondere kann eine Automatisierungseinrichtung beispielsweise eine industrielle Automatisierungseinrichtung sein, die z.B. speziell zur Steuerung und/oder Regelung industrieller Anlagen ausgebildet, eingerichtet und/oder vorgesehen sein kann. Insbesondere können solche Automatisierungseinrichtungen bzw. industriellen Automatisierungseinrichtungen echtzeitfähig sein, d.h. eine Steuerung bzw. Regelung in Echtzeit ermöglichen. Dazu kann die Automatisierungseinrichtung bzw. die industrielle Automatisierungseinrichtung z.B. ein Echtzeitbetriebssystem umfassen und/oder zumindest unter anderem ein echtzeitfähiges Kommunikationsprotokoll zur Kommunikation (z.B. Profinet, Profibus, Real-Time-Ethernet) unterstützen.

Ein Automatisierungsnetzwerk umfasst mehrere Sensoren und Aktuatoren. Die Aktuatoren und Sensoren werden von zumindest einer Steuerungseinrichtung gesteuert. Die Aktuatoren, die Sensoren und die zumindest eine Steuerungseinrichtung tauschen Daten miteinander aus. Zum Datenaustausch wird ein Automatisierungsprotokoll verwendet. Die zumindest eine Steuerungseinrichtung steuert die Aktuatoren, die Sensoren und den Datenaustausch so, dass ein maschineller Fertigungsprozess abläuft, in dem z.B. ein Produkt hergestellt wird.

Eine industrielle Automatisierungseinrichtung kann z.B. eine speicherprogrammierbare Steuerung, ein Modul oder Teil einer speicherprogrammierbaren Steuerung, eine in einem Computer oder PC integrierte speicherprogrammierbare Steuerung sowie entsprechende Feldgeräte, Sensoren und/oder Aktoren, Einund/oder Ausgabegeräte oder Ähnliches zum Anschluss an einer speicherprogrammierbare Steuerung sein oder solche umfassen.

Als Automatisierungsprotokoll im Sinne der vorliegenden Erfindung wird jede Art von Protokoll verstanden, das zur Kommunikation mit Automatisierungs-Einrichtungen gemäß der vorliegenden Beschreibung vorgesehen, geeignet und/oder eingerichtet ist. Solche Automatisierungsprotokolle können beispielsweise das Profi-Bus-Protokoll (z. B. gemäß IEC 61158/EN50170), ein Profi-Bus-DP-Protokoll, ein Profi-Bus-PA-Protokoll, ein Profi-Net-Protokoll, ein Profi-Net-IO-Protokoll, ein Protokoll gemäß AS-Interface, ein Protokoll gemäß IO-Link, ein KNX-Protokoll, ein Protokoll gemäß einer Mehrpunkt-Schnittstelle (Multipoint-Interface, MPI), ein Protokoll für eine Punkt-zu-Punkt-Kopplung (Point-to-Point, PtP), ein Protokoll gemäß den Spezifikationen der S7-Kommunikation (welches beispielsweise zur Kommunikation von speicherprogrammierbaren Steuerungen der Firma Siemens vorgesehen und eingerichtet ist) oder auch ein Industrial-Ethernet-Protokoll oder Real-Time-Ethernt-Protokoll bzw. weitere spezifische Protokolle für die Kommunikation mit Automatisierungsgeräten sein. Als Automatisierungsprotokoll im Sinne der vorliegenden Beschreibung können auch beliebige Kombinationen der vorgenannten Protokolle vorgesehen sein.

Das Automatisierungsnetzwerk umfasst mehrere Netzwerkgeräte und Netzwerkknoten. Jedes Netzwerkgerät umfasst eine ihm zugehörige unveränderbare Adresse. Diese Adresse kann beispielsweise ein Media Access Control (MAC)-Adresse sein.

Zumindest ein Netzwerkknoten umfasst einen Speicher. Der Speicher umfasst erste unveränderbaren Adressen von zur Kommunikation im Automatisierungsnetzwerk autorisierten Netzwerkgeräten. Der Speicher umfasst außerdem zweite unveränderbare Adressen von nicht zur Kommunikation im Automatisierungsnetzwerk autorisierten Netzwerkgeräten. Es ist zu beachten, dass sowohl die ersten unveränderbaren Adressen als auch die zweiten unveränderbaren Adressen eine leere Menge sein können. Falls die ersten unveränderbaren Adressen eine leere Menge ist, ist kein Gerät zur Kommunikation im Automatisierungsnetzwerk autorisiert.

Automatisierungsdaten werden über das Automatisierungsnetzwerk zwischen den Netzwerkgeräten ausgetauscht. Hierfür werden die Automatisierungsdaten im Automatisierungsnetzwerk weitergeleitet. Dies geschieht sowohl durch Netzwerkgeräte als auch durch Netzwerkknoten. Ein Netzwerkknoten kann zum Beispiel ein Switch sein.

Die unveränderbaren Adressen der Netzwerkgeräte werden an die Netzwerkgeräte und die Netzwerkknoten mitgeteilt. Jedes Netzwerkgerät und jeder Netzwerkknoten verfügt also über die unveränderbaren Adressen der sich im Automatisierungsnetzwerk befindenden Netzwerkgeräte und Netzwerkknoten. Die Kommunikation im Automatisierungsnetzwerk kann beispielsweise über das TCP/IP-Protokoll erfolgen. In diesem Fall ist die unveränderbare Adresse eine MAC-Adresse. Die MAC-Adressen der Netzwerkgeräte und der Netzwerkknoten werden über das sogenannte Address Resolution Protocol (ARP) an alle Netzwerkgeräte und Netzwerkknoten im Automatisierungsnetzwerk gesendet. Jedes Netzwerkgerät und jeder Netzwerkknoten verfügt also über die die MAC-Adressen der übrigen Netzwerkgeräte und der übrigen Netzwerkknoten.

Wenn ein neues Netzwerkgerät einem bereits bestehenden Automatisierungsnetzwerk hinzugefügt wird, wird in diesem Falle die unveränderbare Adresse des neu hinzugefügten Netzwerkgeräts an die übrigen Netzwerkgeräte und an die Netzwerkknoten übermittelt.

Die unveränderbare Adresse eines Netzwerkgeräts wird in Speicher zumindest eines Netzwerkknotens als zweite unveränderbare Adresse gespeichert, wenn diese unveränderbare Adresse nicht als erste unveränderbare Adresse gespeichert ist. Wenn dem Netzwerkknoten also eine unveränderbare Adresse mitgeteilt wird, die er nicht als erste unveränderbare Adresse gespeichert hat, wird diese unveränderbare Adresse als zweite unveränderbare Adresse gespeichert.

Alternativ können Automatisierungsdaten eines Netzwerkgeräts mit einer unveränderbaren Adresse, die der zumindest eine Netzwerkknoten nicht als erste unveränderbare Adresse gespeichert hat, blockiert werden. In diesem Fall erfolgt keine Speicherung dieser unveränderbaren Adresse als zweite unveränderbare Adresse in dem Speicher des zumindest einen Netzwerkknotens.

Automatisierungsdaten von Netzwerkgeräten mit einer unveränderbaren Adresse, die als zweite unveränderbare Adresse in dem Speicher gespeichert ist, werden von dem Netzwerkknoten nicht weitergeleitet. Diese Automatisierungsdaten werden also von dem Netzwerkknoten blockiert.

Zur Blockierung liest der Netzwerkknoten die Quelladresse der Automatisierungsdaten, die sich in den Automatisierungsdaten befindet. Diese Quelladresse ist die unveränderbare Adresse des Netzwerkgeräts, das die Automatisierungsdaten ausgesendet hat. Wenn diese Quelladresse als zweite unveränderbare Adresse in dem Speicher des Netzwerkknotens gespeichert ist, wird eine Weiterleitung verhindert, was gleichbedeutend mit einer Blockierung der Automatisierungsdaten ist.

Nach Ausführungsformen der Erfindung umfassen alle Netzwerkknoten des Automatisierungsnetzwerks jeweils einen Speicher mit ersten und zweiten unveränderbaren Adressen. In diesem Fall wird bei der Einrichtung des Automatisierungsnetzwerks für jeden Netzwerkknoten in dem Speicher definiert, welche Netzwerkgeräte zum Datenaustausch über das Automatisierungsnetzwerk berechtigt sind. Alternativ oder zusätzlich kann ein solcher Netzwerkknoten auch in eine sogenannte Lernphase geschaltet werden. In der Lernphase speichert der Netzwerkknoten jede ihm von einem Netzwerkgerät des Automatisierungsnetzwerks mitgeteilte unveränderbare Adresse dieses Netzwerkgeräts in dem Speicher als erste unveränderbare Adresse ab. Es werden also in dem Speicher alle unveränderbaren Adressen von Netzwerkgeräten als erste unveränderbare Adressen eingetragen, die sich zu diesem Zeitpunkt im Automatisierungsnetzwerk befinden. Eine solche Einrichtung des Speichers ist vorteilhaft, da sie automatisch geschieht.

Nach Ausführungsformen der Erfindung umfassen alle Netzwerkknoten des Automatisierungsnetzwerks jeweils einen Speicher mit zweiten unveränderbaren Adressen. Zumindest ein Netzwerkknoten umfasst einen Speicher mit ersten unveränderbaren Adressen. Wenn der zumindest eine Netzwerkknoten eine unveränderbare Adresse eines Netzwerkgeräts registriert, die nicht als erste unveränderbare Adresse gespeichert ist, sendet er diese unveränderbare Adresse an die übrigen Netzwerkknoten. Die übrigen Netzwerkknoten speichern diese unveränderbare Adresse in dem Speicher jeweils als zweite unveränderbare Adresse ab.

Eine solche Ausführungsform ist vorteilhaft, da nicht an jedem Netzwerkknoten eine erste unveränderbare Adressen gespeichert werden müssen. Der zumindest eine Netzwerkknoten speichert die unveränderbare Adresse eines Netzwerkgeräts, dessen unveränderbare Adresse nicht als erste unveränderbare Adresse gespeichert wurde, als zweite unveränderbare Adresse. Der zumindest eine Netzwerkknoten mit den ersten unveränderbaren Adressen sendet diese unveränderbare Adresse an die übrigen Netzwerkknoten im Automatisierungsnetzwerk. Die übrigen Netzwerkknoten speichern die unveränderbare Adresse jeweils als zweite unveränderbare Adresse.

Es speichert also jeder Netzwerkknoten eine Information, dass Daten, deren Absender eine unveränderbare Adresse hat, die als zweite unveränderbare Adresse gespeichert wurde, blockiert werden. Eine Blockierung dieser Automatisierungsdaten findet in jedem Netzwerkknoten statt, sodass sich kein Weg durch das Netzwerk ergibt, der eine Übertragung dieser Automatisierungsdaten ermöglichen würde. Die zweiten unveränderbaren Adressen der Netzwerkknoten werden durch den zumindest einen Netzwerkknoten mit den ersten unveränderbaren Adressen aktuell gehalten. Dies geschieht dadurch, dass der zumindest eine Netzwerkknoten mit den ersten unveränderbaren Adressen jede unveränderbare Adresse, die als erste unveränderbare Adresse gespeichert ist, an die übrigen Netzwerkknoten übermittelt.

Nach Ausführungsformen der Erfindung werden die Automatisierungsdaten im Automatisierungsnetzwerk mittels des TCP/IP-Protokolls ausgetauscht. Dies ist vorteilhaft, da bei einem Datenaustausch mittels des TCP/IP-Protokolls immer die unveränderbaren Adressen der Netzwerkgeräte im Automatisierungsnetzwerk den übrigen Netzwerkgeräten und den Netzwerkknoten mitgeteilt werden.

Nach Ausführungsformen der Erfindung werden die unveränderbaren Adressen der Netzwerkgeräte über das Address Resolution Protocol (ARP) mitgeteilt. Dies kann beispielsweise über eine Auswertung von Telegrammen des Address Resolution Protocol (ARP) geschehen. Vorzugsweise handelt es sich bei den unveränderbaren Adressen um Media Access Control (MAC)-Adresse.

Nach Ausführungsformen der Erfindung werden während einer Lernphase des zumindest einen Netzwerkknotens alle mitgeteilten unveränderbaren Adressen als erste unveränderbare Adressen gespeichert. Somit wird eine manuelle Einrichtung des Netzwerkknotens überflüssig und jedes Netzwerkgerät, das sich während der Lernphase im Automatisierungsnetzwerk befindet, wird zum Datenaustausch über das Automatisierungsnetzwerk autorisiert.

Nach Ausführungsformen der Erfindung können während des Betriebs des Automatisierungsnetzwerks durch ein Netzwerkgerät unveränderbaren Adressen als erste und/oder als zweite unveränderbare Adressen in den Speicher des zumindest einen Netzwerkknotens eingetragen werden.

In einem weiteren Aspekt betrifft die Erfindung einen Netzwerkknoten für ein Automatisierungsnetzwerk. Der Netzwerkknoten ist dazu ausgebildet, Automatisierungsdaten im Automatisierungsnetzwerk von einem Netzwerkgerät des Automatisierungsnetzwerks zu einem anderen Netzwerkgerät des Automatisierungsnetzwerks und/oder zu einem anderen Netzwerkknoten weiterzuleiten. Hierfür verfügt der Netzwerkknoten über Mittel zum Empfang von Automatisierungsdaten von Netzwerkgeräten. Dies kann beispielsweise eine Schnittstelle sein, von der der Netzwerkknoten mit dem Automatisierungsnetzwerk verbunden ist. Außerdem umfasst der Netzwerkknoten Mittel zum Empfang von unveränderbaren Adressen von Netzwerkgeräten. Die unveränderbaren Adressen können beispielsweise über die gleiche Schnittstelle empfangen werden.

Empfangene Automatisierungsdaten können vom Netzwerkknoten mit Mitteln zum Weiterleiten von empfangenen Automatisierungsdaten an Netzwerkgeräte des Automatisierungsnetzwerks weitergeleitet werden. Dieses Mittel zum Weiterleiten kann beispielsweise eine Schnittstelle des Netzwerkknotens sein, mit der der Netzwerkknoten mit dem Automatisierungsnetzwerk verbunden ist.

Außerdem umfasst der Netzwerkknoten einen Speicher mit ersten und zweiten unveränderbaren Adressen. Die ersten und die zweiten unveränderbaren Adressen können beispielsweise auf einem digitalen Speichermedium im Netzwerkknoten gespeichert sein. Die ersten unveränderbaren Adressen sind unveränderbare Adressen von zur Kommunikation im Automatisierungsnetzwerk autorisierten Netzwerkgeräten. Die zweiten unveränderbaren Adressen sind unveränderbare Adressen von nicht zur Kommunikation im Automatisierungsnetzwerk autorisierten Netzwerkgeräten. Es ist zu beachten, dass die ersten und die zweiten unveränderbaren Adressen auch nur eine oder keine unveränderbare Adresse sein kann.

Außerdem verfügt der Netzwerkknoten über Mittel zum Vergleich von unveränderbaren Adressen von Netzwerkgeräten mit den ersten unveränderbaren Adressen. Dieses Mittel zum Vergleich kann beispielsweise ein Prozessor sein. Wenn Daten vom Netzwerkknoten empfangen werden, registriert der Prozessor zum Beispiel die unveränderbare Adresse des Netzwerkgeräts, das die Daten abgesendet hat. Der Prozessor vergleicht dann diese unveränderbare Adresse mit den ersten unveränderbaren Adressen.

Ferner umfasst der Netzwerkknoten Mittel zur Speicherung von unveränderbaren Adressen von Netzwerkgeräten als erste und/oder als zweite unveränderbare Adressen. Die Speicherung kann beispielsweise dadurch erfolgen, dass der Prozessor die unveränderbaren Adressen als erste und/oder als zweite unveränderbare Adressen speichert. Die Mittel zur Speicherung sind dazu ausgebildet, die unveränderbare Adresse eines Netzwerkgeräts, die nicht als erste unveränderbare Adresse gespeichert ist, als zweite unveränderbare Adresse zu speichern.

Ferner umfasst der Netzwerkknoten Mittel zum Vergleich von unveränderbaren Adressen von Netzwerkgeräten mit den zweiten unveränderbaren Adressen. Der Vergleich der unveränderbaren Adressen von Netzwerkgeräten mit den zweiten unveränderbaren Adressen kann beispielsweise ebenfalls vom Prozessor des Netzwerkknotens durchgeführt werden. Die Mittel zum Vergleich sind dazu ausgebildet, dass Automatisierungsdaten von Netzwerkgeräten mit einer unveränderbaren Adresse, die als zweite unveränderbare Adresse gespeichert ist, blockiert werden. Eine Weiterleitung solcher Daten wird also verhindert.

In noch einem weiteren Aspekt betrifft die Erfindung ein computerlesbares Speichermedium mit Instruktionen, die bei Ausführung in einem Netzwerkknoten nach Ausführungsformen der Erfindung in einem Automatisierungssystem den Netzwerkknoten zur Ausführung eines Verfahrens nach Ausführungsformen der Erfindung veranlassen. Die Instruktionen können beispielsweise durch einen Prozessor des Netzwerkknotens ausgeführt werden.

Automatisierungsdaten und unveränderbaren Adressen von Netzwerkgeräten werden empfangen. Die empfangenen Automatisierungsdaten werden an Netzwerkgeräte weitergeleitet. Die unveränderbaren Adressen von Netzwerkgeräten werden mit ersten unveränderbaren Adressen verglichen. Unveränderbaren Adressen von Netzwerkgeräten werden als erste und/oder als zweite unveränderbare Adressen gespeichert. Die unveränderbare Adresse eines Netzwerkgeräts, die nicht in als erste unveränderbare Adresse gespeichert ist, wird als zweite unveränderbare Adresse gespeichert.

Unveränderbare Adressen von Netzwerkgeräten werden mit den zweiten unveränderbaren Adressen verglichen. Automatisierungsdaten von Netzwerkgeräten mit einer unveränderbaren Adresse, die als zweite unveränderbare Adresse gespeichert ist, werden blockiert. Solche Automatisierungsdaten werden also nicht weitergeleitet.

In noch einem weiteren Aspekt betrifft die Erfindung ein Automatisierungsnetzwerk mit zumindest einem Netzwerkknoten nach Ausführungsformen der Erfindung.

Im Folgenden werden Ausführungsformen der Erfindung anhand von Abbildungen näher erläutert. Es zeigen:
- Figur 1: ein Blockdiagramm eines Kopplungsknotens in einem Automatisierungsnetzwerk; und
- Figur 2: ein Flussdiagramm eines Verfahrens nach Ausführungsformen der Erfindung.

Elemente der nachfolgenden Figuren, die einander entsprechen, sind mit denselben Bezugszeichen gekennzeichnet.

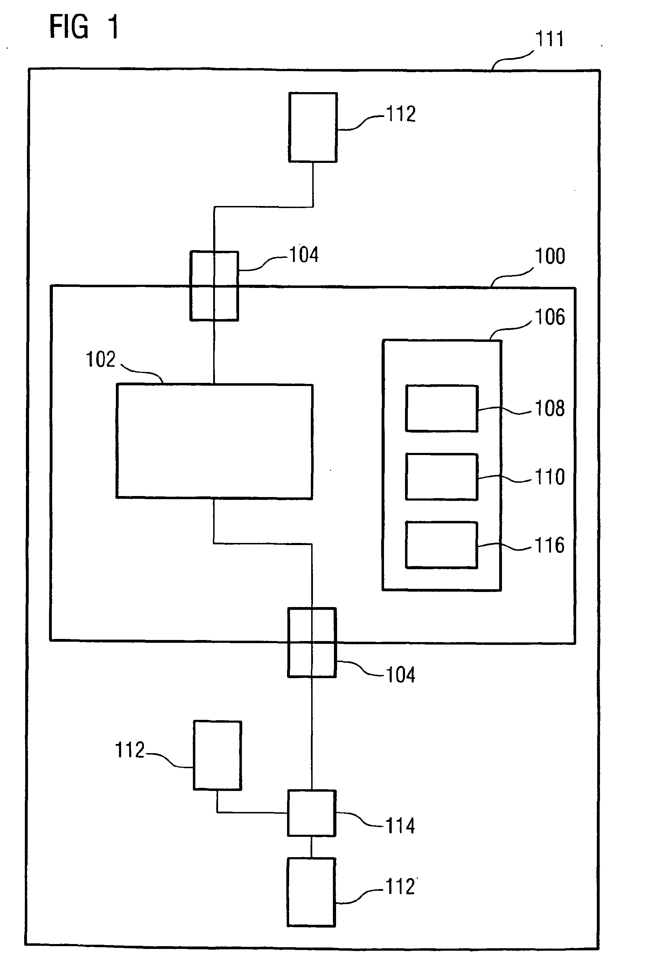

Figur 1 ist eine schematische Ansicht eines Automatisierungsnetzwerks 111 mit Netzwerkknoten 100 und 114 und Netzwerkgeräten 112. Es sind lediglich drei Netzwerkgeräte 112 und zweite Netzwerkknoten 114 und 100 dargestellt. Dies dient zur Vereinfachung der Figur 1. Das Automatisierungsnetzwerk 111 kann auch noch mehr Netzwerkknoten und mehr Netzwerkgeräte 112 oder aber auch weniger Netzwerkgeräte 112 umfassen. Der Netzwerkknoten 100 ist zur besseren Darstellung vergrößert dargestellt. Der Netzwerkknoten 100 umfasst einen Prozessor 102, zwei Schnittstellen 104 und einen Datenspeicher 106 mit ersten unveränderbaren Adressen 108 und zweiten unveränderbaren Adressen 110. Außerdem befindet sich im Speicher 106, der ein computerlesbares Speichermedium ist, ein Programm mit Instruktionen 116, die von dem Prozessor 102 ausgeführt werden können.

Das digitale Speichermedium kann ein optisches oder magnetisches digitales Speichermedium sein. Es kann sich also beispielsweise um eine CD, eine DVD, eine Speicherkarte oder eine Festplatte handeln.

Der Netzwerkknoten 114 kann genauso ausgebildet sein wie der Netzwerkknoten 100. Alternativ kann der Netzwerkknoten 114 auch lediglich über zweite unveränderbare Adressen und nicht über erste unveränderbare Adressen verfügen. Der Netzwerkknoten 114 umfasst außerdem drei Schnittstellen 104 (nicht dargestellt).

Im Betrieb leitet der Netzwerkknoten 100 Automatisierungsdaten innerhalb des Automatisierungsnetzwerks 111 von einem Netzwerkgerät 112 zu einem anderen Netzwerkgerät 112. Der Netzwerkknoten 100 kann ebenfalls Automatisierungsdaten an einen weiteren Netzwerkknoten 114 weiterleiten. Die Datenweiterleitung und das Empfangen von Daten erfolgt beim Netzwerkknoten 100 über die Schnittstelle 104. Der Prozessor 102 führt ein Programm 116 aus, das den Prozessor 102 zur Weiterleitung der Daten veranlasst.

Jedes Netzwerkgerät 112 und jeder Netzwerkknoten 100 und 114 verfügt über eine unveränderbare Adresse. Dies kann beispielsweise eine Media Access Control (MAC)-Adresse sein. Beim Aufbau des Netzwerks teilen alle Netzwerkgeräte 112 ihre unveränderbare Adresse den anderen Netzwerkgeräten 112 mit. Die unveränderbaren Adressen werden auch von den Netzwerkknoten 100 und 114 registriert. Gleichzeitig mit dieser automatisierten Ermittlung von Teilnehmern im Kommunikationsnetzwerk 111 erfolgt eine automatisierte Sperrung von nicht-autorisierten Netzwerkgeräten. Die unveränderbaren Adressen von nicht-autorisierten Netzwerkgeräten werden als zweite unveränderbare Adressen 110 des Netzwerkknotens 100 gespeichert. Der Prozessor 102 des Netzwerkknotens 100 stellt fest, dass ein Netzwerkgerät nicht zur Kommunikation im Automatisierungsnetzwerk berechtigt ist, wenn die unveränderbare Adresse dieses Netzwerkgerätes nicht als erste unveränderbare Adresse 108 gespeichert ist. Die ersten unveränderbaren Adressen 108 können beispielsweise manuell eingegeben worden sein oder aber auch während einer Lernphase des Kopplungsknotens 100 dort eingetragen worden sein. Eine solche Eintragung erfolgt mittels des Prozessors 102.

Während der Lernphase speichert der Prozessor 102 des Netzwerkknotens 100 jede unveränderbare Adresse jedes Netzwerkgeräts 112 als erste unveränderbare Adresse 108. Somit entfällt eine manuelle Konfiguration der ersten unveränderbaren Adressen 108.

Der Netzwerkknoten 114 kann ebenfalls über erste und zweite unveränderbare Adressen verfügen. Alternativ verfügt der Netzwerkknoten 114 lediglich über zweite unveränderbare Adressen. Der Netzwerkknoten 100 teilt in diesem Fall dem Netzwerkknoten 114 jede unveränderbare Adresse mit, die der Prozessor 102 als zweite unveränderbare Adresse 110 des Netzwerkknotens 100 speichert. Die zweiten unveränderbaren Adressen des Netzwerkknotens 114 umfassen also die gleichen unveränderbaren Adressen wie die zweiten unveränderbaren Adressen 110 des Netzwerkknotens 100.

Ein solches Verfahren ist besonders vorteilhaft, da so die automatisierte Ermittlung von Netzwerkgeräten im Netz zusammen mit dem automatisierten Blockieren nicht autorisierter Netzwerkgeräte verknüpft wird.

Die Erkennung der Netzwerkgeräte wird über Mechanismen der Vermittlungsschicht im OSI-Schichtmodell durchgeführt, während die Blockierung der Netzwerkgeräte in den Netzwerkknoten 100 und 114 auf der Verbindungsschicht des OSI-Schichtmodells stattfindet. Es werden also Informationen verschiedener ISO-Schichten für Ausführungsformen der Erfindung verwendet. Dadurch, dass ein nicht-autorisiertes Netzwerkgerät gleich automatisch mit der Ermittlung der unveränderbaren Adresse dieses Netzwerkgeräts gesperrt wird, wird die Sicherheit des Automatisierungsnetzwerks erhöht.

Ein weiterer Vorteil von Ausführungsformen der Erfindung ist die Tatsache, dass die Netzwerkgeräte 112 das Verfahren nicht unterstützen müssen. Die Netzwerkgeräte 112 teilen nach dem ARP-Protokoll ihre unveränderbaren Adressen und ihre IP-Adressen den anderen Netzwerkgeräten und den Netzwerkknoten 100 und 114 mit. Alleine durch diesen Schritt wird die Blockierung von nicht-autorisierten Netzwerkgeräten durch den Netzwerkknoten 100 ausgelöst. Eine Datenübertragung eines nicht zur Kommunikation autorisierten Netzwerkgeräts über das Automatisierungsnetzwerk 111 wird somit verhindert.

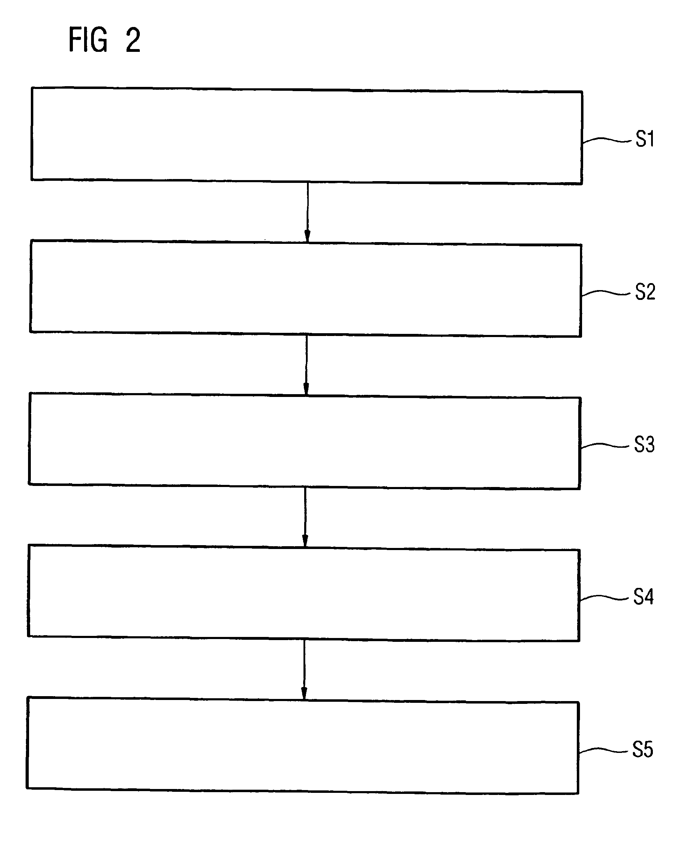

Figur 2 ist ein Flussdiagramm eines Verfahrens nach Ausführungsformen der Erfindung. In einem ersten Schritt S1 werden Automatisierungsdaten über das Automatisierungsnetzwerk zwischen den Netzwerkgeräten über Netzwerkknoten ausgetauscht. Die Automatisierungsdaten umfassen hierbei unveränderbare Adressen der Netzwerkgeräte. Die unveränderbaren Adressen der Netzwerkgeräte sind den Netzwerkknoten bekannt, da diese beim Aufbau des Netzwerks und beim Hinzufügen eines neuen Netzwerkgerätes allen Netzwerkgeräten und Netzwerkknoten bekannt gemacht werden.

Die Automatisierungsdaten werden durch zumindest einen Kopplungsknoten in Schritt S2 weitergeleitet. Die Weiterleitung erfolgt innerhalb des Automatisierungsnetzwerks. Die unveränderbaren Adressen werden in Schritt S3 an die Netzwerkgeräte und die Netzwerkknoten mitgeteilt. Somit verfügt jedes Netzwerkgerät und jeder Netzwerkknoten über die unveränderbaren Adressen der übrigen Netzwerkgeräte und Netzwerkknoten.

In Schritt S4 wird eine unveränderbare Adresse eines Netzwerkgeräts als zweite unveränderbare Adresse in den Speicher des zumindest einen Netzwerkknotens gespeichert. Automatisierungsdaten von Netzwerkgeräten mit einer unveränderbaren Adresse, die als zweite unveränderbare Adresse gespeichert ist, werden dann in Schritt S5 vom Netzwerkknoten blockiert. Es ist somit nicht-autorisierten Netzwerkgeräten nicht möglich, Daten über das Automatisierungsnetzwerk zu senden.

### Bezugszeichenliste

- 100: Netzwerkknoten
- 102: Prozessor
- 104: Schnittstelle
- 106: Speicher
- 108: erste unveränderbare Adressen
- 110: zweite unveränderbare Adressen
- 111: Automatisierungsnetzwerk
- 112: Netzwerkgerät
- 114: Netzwerkknoten
- 116: Instruktionen

## Patentansprüche

1. Verfahren zur Kommunikation in einem Automatisierungsnetzwerk (111) mit mehreren Netzwerkgeräten (112) und Netzwerkknoten (100; 114), wobei jedes Netzwerkgerät eine ihm zugehörige unveränderbare Adresse umfasst, wobei zumindest ein Netzwerkknoten einen Speicher (106) umfasst, wobei der Speicher erste unveränderbare Adressen (108) von zur Kommunikation im Automatisierungsnetzwerk autorisierten Netzwerkgeräten und zweite unveränderbare Adressen (110) von nicht zur Kommunikation im Automatisierungsnetzwerk autorisierten Netzwerkgeräten umfasst, wobei das Automatisierungsnetzwerk
- zum Austausch (S1) von Automatisierungsdaten über das Automatisierungsnetzwerk zwischen den Netzwerkgeräten,
- zum Weiterleiten (S2) der Automatisierungsdaten im Automatisierungsnetzwerk, und
- zur Mitteilung (S3) der unveränderbaren Adressen an die Netzwerkgeräte und die Netzwerkknoten,
ausgebildet ist,
und wobei das Verfahren die folgenden Schritt umfasst:
- Speicherung (S4) einer unveränderbaren Adresse eines Netzwerkgeräts als zweite unveränderbare Adresse in den Speicher des zumindest einen Netzwerkknotens, wenn diese unveränderbare Adresse nicht als erste unveränderbare Adresse in dem Speicher des zumindest einen Netzwerknotens gespeichert ist, und
- Blockierung (S5) von Automatisierungsdaten von Netzwerkgeräten mit einer unveränderbaren Adresse durch den zumindest einen Netzwerkknoten, wenn diese unveränderbare Adresse nicht als erste unveränderbare Adresse in dem Speicher des zumindest einen Netzwerkknotens gespeichert ist.

2. Verfahren nach Anspruch 1, wobei alle Netzwerkknoten des Automatisierungsnetzwerks jeweils einen Speicher mit ersten und zweiten unveränderbaren Adressen umfassen.

3. Verfahren nach Anspruch 1, wobei alle Netzwerkknoten des Automatisierungsnetzwerks jeweils einen Speicher mit zweiten unveränderbaren Adressen umfassen,
wobei der zumindest eine Netzwerkknoten mit dem Speicher mit den ersten unveränderbaren Adressen die unveränderbare Adresse eines Netzwerkgeräts, die nicht als erste unveränderbare Adresse in dem Speicher gespeichert ist, an die übrigen Netzwerkknoten sendet,
wobei die übrigen Netzwerkknoten die unveränderbare Adresse, die von dem zumindest einen Netzwerkknoten mit dem Speicher mit den ersten unveränderbaren Adressen empfangen wurde, in dem jeweiligen Speicher als zweite unveränderbare Adresse speichern
und wobei die übrigen Netzwerkknoten Automatisierungsdaten von Netzwerkgeräten mit einer unveränderbaren Adresse blockieren, wenn diese unveränderbare Adresse in dem Speicher als zweite unveränderbare Adresse gespeichert ist.

4. Verfahren nach einem der vorhergehenden Ansprüche, wobei die Automatisierungsdaten im Automatisierungsnetzwerk mittels des TCP/IP-Protokolls ausgetauscht werden.

5. Verfahren nach Anspruch 4, wobei die unveränderbaren Adressen der Netzwerkgeräte über das Address Resolution Protocol mitgeteilt werden.

6. Verfahren nach einem der vorhergehenden Ansprüche, wobei während einer Lernphase des zumindest einen Netzwerkknotens alle mitgeteilten unveränderbaren Adressen in den Speicher als erste unveränderbare Adressen gespeichert werden.

7. Verfahren nach einem der vorhergehenden Ansprüche, wobei während des Betriebs des Automatisierungsnetzwerks durch ein Netzwerkgerät unveränderbare Adressen in den Speicher des zumindest einen Netzwerkknotens als erste und/oder als zweite unveränderbare Adressen eingetragen werden können.

8. Netzwerkknoten (100) für ein Automatisierungsnetzwerk (111), wobei der Netzwerkknoten dazu ausgebildet ist, Automatisierungsdaten im Automatisierungsnetzwerk von einem Netzwerkgerät des Automatisierungsnetzwerks zu einem anderen Netzwerkgeräts des Automatisierungsnetzwerks und/oder zu einem anderen Netzwerkknoten weiterzuleiten, mit:
- Mitteln (104) zum Empfang von Automatisierungsdaten von Netzwerkgeräten,
- Mitteln (104) zum Empfang von unveränderbaren Adressen von Netzwerkgeräten,
- Mitteln (104) zum Weiterleiten von empfangenen Automatisierungsdaten an Netzwerkgeräte,
- einem Speicher (106), wobei der Speicher erste unveränderbare Adressen (108) von zur Kommunikation im Automatisierungsnetzwerk autorisierten Netzwerkgeräten umfasst,
- Mitteln (102) zum Vergleich von unveränderbaren Adressen von Netzwerkgeräten mit den ersten unveränderbaren Adressen im Speicher,
- Mitteln (102; 106) zur Speicherung von unveränderbaren Adressen von Netzwerkgeräten in den Speicher als erste unveränderbare Adressen,
- Mitteln (102; 106) zur Speicherung einer unveränderbaren Adresse eines Netzwerkgeräts als zweite unveränderbare Adresse in den Speicher des zumindest einen Netzwerkknotens, wenn diese unveränderbare Adresse nicht als erste unveränderbare Adresse in dem Speicher des zumindest einen Netzwerknotens gespeichert ist, und
- Mitteln (102) zum Vergleich von unveränderbaren Adressen von Netzwerkgeräten mit den ersten unveränderbaren Adressen im Speicher, wobei die Mittel zum Vergleich dazu ausgebildet sind, dass Automatisierungsdaten von Netzwerkgeräten mit einer unveränderbaren Adresse, die nicht als erste unveränderbare Adresse in dem Speicher gespeichert sind, blockiert werden.

9. Netzwerkknoten nach Anspruch 8, wobei der Speicher zweite unveränderbare Adressen von nicht zur Kommunikation im Automatisierungsnetzwerk autorisierten Netzwerkgeräten umfasst, wobei die Mittel zur Speicherung außerdem dazu ausgebildet sind, unveränderbare Adressen von Netzwerkgeräten als zweite unveränderbare Adressen in den Speicher zu speichern, wobei die Mittel zum Vergleich dazu ausgebildet sind, unveränderbare Adressen von Netzwerkgeräten mit den zweiten unveränderbaren Adressen im Speicher zu vergleichen, und wobei die Mittel zum Vergleich ferner dazu ausgebildet sind, dass Automatisierungsdate von Netzwerkgeräten mit einer unveränderbaren Adresse, die als zweite unveränderbare Adresse in dem Speicher gespeichert ist, blockiert werden.

10. Netzwerkknoten nach Anspruch 8 oder 9, wobei der Netzwerkknoten zur Durchführung eines Verfahrens gemäß einem der Ansprüche 1 bis 7 ausgebildet ist.

11. Computerlesbares Speichermedium (106) mit Instruktionen (116), die bei Ausführung in einem Netzwerkknoten nach einem der Ansprüche 8 oder 9 in einem Automatisierungssystem den Netzwerkknoten zur Ausführung des folgenden Verfahrens veranlassen:
- Empfang von Automatisierungsdaten von Netzwerkgeräten,
- Empfang von unveränderbaren Adressen von Netzwerkgeräten,
- Weiterleiten von empfangenen Automatisierungsdaten an Netzwerkgeräte,
- Speicherung erster unveränderbarer Adressen (108) von zur Kommunikation im Automatisierungsnetzwerk autorisierten Netzwerkgeräten,
- Vergleich von unveränderbaren Adressen von Netzwerkgeräten mit den ersten unveränderbaren Adressen im Speicher,
- Speicherung von unveränderbaren Adressen von Netzwerkgeräten in den Speicher als erste unveränderbare Adressen,
- Speicherung einer unveränderbaren Adresse eines Netzwerkgeräts als zweite unveränderbare Adresse in den Speicher des zumindest einen Netzwerkknotens, wenn diese unveränderbare Adresse nicht als erste unveränderbare Adresse in dem Speicher des zumindest einen Netzwerknotens gespeichert ist,
- Vergleich von unveränderbaren Adressen von Netzwerkgeräten mit den ersten unveränderbaren Adressen im Speicher, wobei die Mittel zum vergleich dazu ausgebildet sind, dass Automatisierungsdaten von Netzwerkgeräten mit einer unveränderbaren Adresse, die nicht als erste unveränderbare Adresse in dem Speicher gespeichert sind, blockiert werden.

12. Computerlesbare Speichermedium nach Anspruch 11, wobei das verfahren außerdem die folgenden Schritte umfasst:
- Speicherung zweiter unveränderbarer Adressen von nicht zur Kommunikation im Automatisierungsnetzwerk autorisierten Netzwerkgeräten,
- Vergleich von unveränderbaren Adressen von Netzwerkgeräten mit den zweiten unveränderbaren Adressen im Speicher,
- Vergleich von unveränderbaren Adressen von Netzwerkgeräten mit den zweiten unveränderbaren Adressen im Speicher, wobei die Mittel zum Vergleich dazu ausgebildet sind, dass Automatisierungsdaten von Netzwerkgeräten mit einer unveränderbaren Aressen, die als zweite unveränderbare Adresse in dem Speicher gespeichert ist, blockiert werden.

13. Computerlesbares Speichermedium nach Anspruch 11 oder 12, wobei das computerlesbare Speichermedium zur Durchführung eines Verfahrens gemäß einem der Ansprüche 1 bis 7 ausgebildet ist.

14. Automatisierungsnetzwerk (111) mit zumindest einem Netzwerkknoten nach einem der Ansprüche 8 bis 10.

15. Automatisierungsnetzwerk nach Anspruch 14, wobei das Automatisierungsnetzwerk zur Durchführung eines Verfahrens gemäß einem der Ansprüche 1 bis 7 ausgebildet ist.

## Claims

1. Method for communication in an automation network (111) having a plurality of network devices (112) and network nodes (100; 114), wherein each network device comprises an associated unalterable address, wherein at least one network node comprises a memory (106), wherein the memory comprises first unalterable addresses (108) of network devices authorized for communication in the automation network and second unalterable addresses (110) of network devices not authorized for communication in the automation network, wherein the automation network is designed
- to interchange (S1) automation data between the network devices via the automation network,
- to forward (S2) the automation data in the automation network, and
- to communicate (S3) the unalterable addresses to the network devices and the network nodes,
and wherein the method comprises the following steps:
- an unalterable address of a network device is stored (S4) as a second unalterable address in the memory of the at least one network node if this unalterable address is not stored as a first unalterable address in the memory of the at least one network node, and
- automation data from network devices having an unalterable address are blocked (S5) by the at least one network node if this unalterable address is not stored as a first unalterable address in the memory of the least one network node.

2. Method according to Claim 1, wherein all the network nodes in the automation network each comprise a memory having first and second unalterable addresses.

3. Method according to Claim 1, wherein all the network nodes in the automation network each comprise a memory having second unalterable addresses,
wherein the at least one network node having the memory having the first unalterable addresses sends the unalterable address of a network device which is not stored as a first unalterable address in the memory to the remainder of the network nodes,
wherein the remainder of the network nodes store the unalterable address which has been received from the at least one network node having the memory having the first unalterable addresses in the respective memory as a second unalterable address,
and wherein the remainder of the network nodes block automation data from network appliances having an unalterable address if this unalterable address is stored in the memory as a second unalterable address.

4. Method according to one of the preceding claims, wherein the automation data are interchanged in the automation network by means of the TCP/IP protocol.

5. Method according to Claim 4, wherein the unalterable addresses of the network devices are communicated using the address resolution protocol.

6. Method according to one of the preceding claims, wherein during a learning phase of the at least one network node all the communicated unalterable addresses are stored in the memory as first unalterable addresses.

7. Method according to one of the preceding claims, wherein during the operation of the automation network a network device is able to enter unalterable addresses into the memory of the at least one network node as first and/or as second unalterable addresses.

8. Network node (100) for an automation network (111), wherein the network node is designed to forward automation data in the automation network from one network device in the automation network to another network device in the automation network and/or to another network node, having:
- means (104) for receiving automation data from network devices,
- means (104) for receiving unalterable addresses from network devices,
- means (104) for forwarding received automation data to network devices,
- a memory (106), wherein the memory comprises first unalterable addresses (108) of network devices authorized for communication in the automation network,
- means (102) for comparing unalterable addresses of network devices with the first unalterable addresses in the memory,
- means (102; 106) for storing unalterable addresses of network devices in the memory as first unalterable addresses,
- means (102; 106) for storing an unalterable address of a network device as a second unalterable address in the memory of the at least one network node if this unalterable address is not stored as a first unalterable address in the memory of the at least one network node, and
- means (102) for comparing unalterable addresses of network devices with the first unalterable addresses in the memory, wherein the means for comparing are designed such that automation data from network appliances having an unalterable address which is not stored as a first unalterable address in the memory are blocked.

9. Network node according to Claim 8, wherein the memory comprises second unalterable addresses of network devices not authorized for communication in the automation network, wherein the means for storing are furthermore designed to store unalterable addresses of network devices as second unalterable addresses in the memory, wherein the means for comparing are designed to compare unalterable addresses of network devices with the second unalterable addresses in the memory, and wherein the means for comparing are also designed such that automation data from network appliances having an unalterable address which is stored as a second unalterable address in the memory are blocked.

10. Network node according to Claim 8 or 9, wherein the network node is designed to carry out a method according to one of Claims 1 to 7.

11. Computer-readable storage medium (106) having instructions (116) which, when executed in a network node according to one of Claims 8 and 9 in an automation system, prompt the network node to perform the following method:
- automation data from network devices are received,
- unalterable addresses of network devices are received,
- received automation data are forwarded to network devices,
- first unalterable addresses (108) of network devices authorized for communication in the automation network are stored,
- unalterable addresses of network devices are compared with the first unalterable addresses in the memory,
- unalterable addresses of network devices are stored in the memory as first unalterable addresses,
- an unalterable address of a network device is stored as a second unalterable address in the memory of the at least one network node if this unalterable address is not stored as a first unalterable address in the memory of the at least one network node,
- unalterable addresses of network devices are compared with the first unalterable addresses in the memory, wherein the means for comparing are designed such that automation data from network devices having an unalterable address which is not stored as a first unalterable address in the memory are blocked.

12. Computer-readable storage medium according to Claim 11, wherein the method furthermore comprises the following steps:
- second unalterable addresses of network devices not authorized for communication in the automation network are stored,
- unalterable addresses of network devices are compared with the second unalterable addresses in the memory,
- unalterable addresses of network devices are compared with the second unalterable addresses in the memory, wherein the means for comparing are designed such that automation data from network appliances having an unalterable address which is stored as a second unalterable address in the memory are blocked.

13. Computer-readable storage medium according to Claim 11 or 12, wherein the computer-readable storage medium is designed to carry out a method according to one of Claims 1 to 7.

14. Automation network (111) having at least one network node according to one of Claims 8 to 10.

15. Automation network according to Claim 14, wherein the automation network is designed to carry out a method according to one of Claims 1 to 7.

## Revendications

1. Procédé de communication dans un réseau ( 111 ) d'automatisation ayant plusieurs appareils ( 112 ) de réseau et noeuds ( 100 ; 114 ) de réseau, chaque appareil de réseau comprenant une adresse, qui ne peut pas être changée, qui lui est affectée, au moins un noeud de réseau comprenant une mémoire ( 106 ), la mémoire comprenant des premières adresses ( 108 ), qui ne peuvent pas être changées, d'appareil de réseau autorisés à communiquer dans le réseau d'automatisation et des deuxièmes adresses ( 110 ), qui ne peuvent pas être changées, d'appareils de réseau non autorisés à communiquer dans le réseau de communication, le réseau d'automatisation étant constitué
- pour l'échange ( S1 ) de données d'automatisation par le réseau d'automatisation entre les appareils d'automatisation,
- pour l'acheminement ( S2 ) des données d'automatisation dans le réseau d'automatisation, et
- pour la communication des adresses qui ne peuvent pas être changées aux appareils du réseau et aux noeuds du réseau,
et dans lequel le procédé comprend les stades suivants :
- mémorisation ( S4 ) d'une adresse, qui ne peut pas être changée, d'un appareil de réseau, comme deuxième adresse, qui ne peut pas être changée, dans la mémoire du au moins un noeud de réseau, si cette adresse, qui ne peut pas être changée, n'est pas mémorisée, comme première adresse, qui ne peut pas être changée, dans la mémoire du au moins un noeud de réseau, et
- blocage ( S5 ) de données d'automatisation d'appareils du réseau ayant une adresse qui ne peut pas être changée, par le au moins un noeud du réseau, si cette adresse, qui ne peut pas être changée, n'est pas mémorisée, comme première adresse, qui ne peut pas être changée, dans la mémoire du au moins un noeud de réseau.

2. Procédé suivant la revendication 1, dans lequel tous les noeuds du réseau d'automatisation comprennent respectivement une mémoire ayant des premières et des deuxièmes adresses, qui ne peuvent pas être changées.

3. Procédé suivant la revendication 1, dans lequel tous les noeuds du réseau d'automatisation comprennent respectivement une mémoire ayant des deuxièmes adresses, qui ne peuvent pas être changées,
dans lequel le au moins un noeud du réseau ayant la mémoire ayant les premières adresses, qui ne peuvent pas être changées, envoie aux autres noeuds du réseau l'adresse, qui ne peut pas être changée, d'un appareil de réseau, qui n'est pas mémorisée, comme première adresse, qui ne peut pas être changée, dans la mémoire,
dans lequel les autres noeuds du réseau mémorisent dans la mémoire respective, comme deuxième adresse qui ne peut pas être changée, l'adresse, qui ne peut pas être changée, qui a été reçue par le au moins un noeud du réseau ayant la mémoire ayant les premières adresses, qui ne peuvent pas être changées,
et dans lequel les autres noeuds du réseau bloquent des données d'automatisation d'appareils de réseau ayant une adresse, qui ne peut pas être changée, si cette adresse, qui ne peut pas être changée, est mémorisée, comme deuxième adresse, qui ne peut pas être changée, dans la mémoire.

4. Procédé suivant l'une des revendications précédentes, dans lequel les données d'automatisation sont échangées dans le réseau d'automatisation au moyen du protocole TCP/IP.

5. Procédé suivant la revendication 4, dans lequel les adresses, qui ne peuvent pas être changées, des appareils du réseau sont communiquées par le protocole Address Resolution.

6. Procédé suivant l'une des revendications précédentes, dans lequel, pendant une phase d'apprentissage du au moins un noeud de réseau, toutes les adresses communiquées, qui ne peuvent pas être changées, sont mémorisées dans la mémoire, comme premières adresses qui ne peuvent pas être changées.

7. Procédé suivant l'une des revendications précédentes, dans lequel, pendant le fonctionnement du réseau d'automatisation, des adresses, qui ne peuvent pas être changées par un appareil de réseau, peuvent être mises dans la mémoire du au moins un noeud de réseau, comme premières et/ou comme deuxièmes adresses, qui ne peuvent pas être changées.

8. Noeud ( 100 ) de réseau, pour un réseau ( 101 ) d'automatisation, le noeud de réseau étant constitué pour acheminer des données d'automatisation dans le réseau d'automation d'un appareil du réseau d'automatisation à un autre appareil du réseau d'automatisation et/ou à un autre noeud du réseau, comprenant :
- des moyens ( 104 ) de réception de données d'automatisation d'appareils du réseau,
- des moyens ( 104 ) de réception d'adresses, qui ne peuvent pas être changées, d'appareils du réseau,
- des moyens ( 104 ) d'acheminement aux appareils du réseau de données d'automatisation reçues,
- une mémoire ( 106 ), la mémoire comprenant des premières adresses ( 108 ), qui ne peuvent pas être changées, d'appareils du réseau autorisés à communiquer dans le réseau d'automatisation,
- des moyens ( 102 ) de comparaison d'adresses, qui ne peuvent pas être changées, d'appareils du réseau aux premières adresses, qui ne peuvent pas être changées, de la mémoire,
- des moyens ( 102 ; 106 ) de mémorisation d'adresses, qui ne peuvent pas être changées, d'appareils du réseau dans la mémoire, comme premières adresses, qui ne peuvent pas être changées,
- des moyens ( 102 ; 106 ) de mémorisation d'une adresse, qui ne peut pas être changée, d'un appareil du réseau, comme deuxième adresse, qui ne peut pas être changée, dans la mémoire du au moins un noeud de réseau, si cette adresse, qui ne peut pas être changée, est mémorisée comme première adresse, qui ne peut pas être changée, dans la mémoire du au moins un noeud de réseau, et
- des moyens ( 102 ) de comparaison d'adresses, qui ne peuvent pas être changées, d'appareils du réseau aux premières adresses, qui ne peuvent pas être changées, de la mémoire, les moyens de comparaison étant constitués pour bloquer des données d'automatisation d'appareils du réseau ayant une adresse, qui ne peut pas être changée, qui ne sont pas mémorisées dans la mémoire, comme première adresse, qui ne peut pas être changée.

9. Noeud de réseau suivant la revendication 8, dans lequel la mémoire comprend des deuxièmes adresses, qui ne peuvent pas être changées, d'appareils de réseau, qui ne sont pas autorisés à communiquer dans le réseau d'automatisation, les moyens de mémorisation étant constitués en outre pour mémoriser dans la mémoire des adresses, qui ne peuvent pas être changées, d'appareils de réseau, comme deuxièmes adresses, qui ne peuvent pas être changées, les moyens de comparaison étant constitués pour comparer dans la mémoire des adresses, qui ne peuvent pas être changées, d'appareils du réseau aux deuxièmes adresses, qui ne peuvent pas être changées, et les moyens de comparaison étant en outre constitués pour bloquer des données d'automatisation d'appareils du réseau ayant une adresse, qui ne peut pas être changées et qui est mémorisée dans la mémoire, comme deuxième adresse qui ne peut pas être changée.

10. Noeud de réseau suivant la revendication 8 ou 9, dans lequel le noeud du réseau est constitué pour effectuer un procédé suivant l'une des revendications 1 à 7.

11. Support ( 106 ) de mémoire, pouvant être lu par ordinateur et ayant des instructions ( 116 ) qui, lorsqu'elles sont exécutées dans un noeud de réseau suivant l'une des revendications 8 ou 9 d'un système d'automatisation, font que le noeud de réseau exécute le procédé suivant :
- réception de données d'automatisation d'appareils du réseau,
- réception d'adresses, qui ne peuvent pas être changées, d'appareils du réseau,
- acheminement aux appareils du réseau de données d'automatisation reçues,
- mémorisation de premières adresses ( 108 ), qui ne peuvent pas être changées, d'appareils de réseau autorisés à communiquer dans le réseau d'automatisation,
- comparaison dans la mémoire d'adresses, qui ne peuvent pas être changées, d'appareils de réseau aux premières adresses qui ne peuvent pas être changées,
- mémorisation d'adresses, qui ne peuvent pas être changées, d'appareils de réseau dans la mémoire, comme premières adresses, qui ne peuvent pas être changées,
- mémorisation d'une adresse, qui ne peut pas être changée, d'un appareil de réseau, comme deuxième adresse, qui ne peut pas être changée, dans la mémoire du au moins un noeud de réseau, si cette adresse, qui ne peut pas être changée, n'est pas mémorisée comme première adresse, qui ne peut pas être changée, dans la mémoire du au moins un noeud de réseau,
- comparaison d'adresses, qui ne peuvent pas être changées, d'appareils du réseau aux premières adresses, qui ne peuvent pas être changées de la mémoire, les moyens de comparaison étant constitués pour que soit bloquées des données d'automatisation d'appareils de réseau ayant une adresse, qui ne peut pas être changée, qui ne sont pas mémorisées dans la mémoire, comme premières adresses, qui ne peuvent pas être changées.

12. Support de mémoire pouvant être lu par ordinateur suivant la revendication 11, dans lequel le procédé comprend en outre les stades suivants :
- mémorisation de deuxièmes adresses, qui ne peuvent pas être changées, d'appareils de réseau, qui ne sont pas autorisés à communiquer dans le réseau d'automatisation,
- comparaison d'adresses, qui ne peuvent pas être changées, d'appareils de réseau aux deuxièmes adresses, qui ne peuvent pas être changées de la mémoire,
- comparaison d'adresses, qui ne peuvent pas être changées, d'appareils de réseau aux deuxièmes adresses, qui ne peuvent pas être changées, de la mémoire, les moyens de comparaison étant constitués pour que soient bloquées des données d'automatisation d'appareils du réseau ayant une adresse, qui ne peut pas être changées et qui est mémorisée dans la mémoire, comme deuxième adresse, qui ne peut pas être changée.

13. Support de mémoire pouvant être lu par ordinateur suivant la revendication 11 ou 12, dans lequel le support de mémoire pouvant être lu par ordinateur est constitué pour exécuter un procédé suivant l'une des revendications 1 à 7.

14. Réseau ( 111 ) d'automatisation ayant au moins un noeud de réseau suivant l'une des revendications 8 à 10.

15. Réseau d'automatisation suivant la revendication 14, dans lequel le réseau d'automatisation est constitué pour effectuer un procédé suivant l'une des revendications 1 à 7.
